# EUROPÄISCHE PATENTSCHRIFT

(11) **EP 2 468 561 B1**
(45) Veröffentlichungstag und Bekanntmachung des Hinweises auf die Patenterteilung: **23.08.2017**
(21) Anmeldenummer: 11009839.9
(22) Anmeldetag: 14.12.2011
(51) Int. Cl.: B60K 15/035, F02D 41/00, F02M 25/08, B60K 15/03, F02D 41/04

(54) **Verfahren zum Betreiben eines Kraftstoffsystems sowie Kraftstoffsystem**
Fuel system and method for operating a fuel system
Procédé de fonctionnement d'un système de carburant et système de carburant

(30) Priorität: 21.12.2010 DE 102010055313
(43) Veröffentlichungstag der Anmeldung: 27.06.2012
(73) Patentinhaber: Audi AG, 85045 Ingolstadt (DE)
(72) Erfinder: Hagen, Harald, 95473 Creussen (DE)
(74) Vertreter: Lehle, Josef

(56) Entgegenhaltungen:
- DE-A1-102009 009 901
- GB-A- 2 286 695
- US-A- 5 259 412
- US-A- 5 603 349

## Beschreibung

Die Erfindung betrifft ein Verfahren zum Betreiben eines Kraftstoffsystems einer Brennkraftmaschine, wobei das Kraftstoffsystem über einen Kraftstofftank und eine mindestens ein Entlüftungsventil aufweisende Entlüftungseinrichtung zur Entlüftung des Kraftstofftanks verfügt. Die Erfindung betrifft weiterhin ein Kraftstoffsystem.

Verfahren der eingangs genannten Art sind aus dem Stand der Technik bekannt. Das entsprechende Kraftstoffsystem ist beispielsweise einem Kraftfahrzeug beziehungsweise einem Antriebssystem des Kraftfahrzeugs zugeordnet. Das Antriebssystem verfügt dabei insbesondere über zumindest eine Brennkraftmaschine und ist beispielsweise als Hybridantriebssystem ausgebildet, weist also die Brennkraftmaschine sowie zumindest eine elektrische Maschine auf, wobei die Brennkraftmaschine und die elektrische Maschine ein Antriebsmoment des Antriebssystems zumindest zeitweise gemeinsam erzeugen. Der Brennkraftmaschine wird von dem Kraftstoffsystem Kraftstoff aus dem Kraftstofftank zugeführt. Häufig wird als Kraftstoff ein flüchtiger Kohlenwasserstoffkraftstoff, beispielsweise Benzin, verwendet. Der Kraftstofftank enthält daher normalerweise sowohl ein Volumen an flüssigem Kraftstoff als auch ein Volumen an gasförmigem Kraftstoff, welches insbesondere oberhalb des flüssigen Kraftstoffs anfällt. Der Kraftstofftank kann ein geschlossener Tank, insbesondere ein Drucktank, oder ein teilgeschlossener, insbesondere auch druckloser, Tank sein. Der geschlossene Tank wird insbesondere zur Reduzierung von Emissionen verwendet.

Bedingt durch Schwankungen der Temperatur des Kraftstoffs, beispielsweise verursacht durch Veränderungen der Umgebungstemperatur, können Druckschwankungen in dem Kraftstofftank auftreten. Aus diesem Grund ist die Entlüftungseinrichtung dem Kraftstofftank zugeordnet. Sie dient der Entlüftung des Kraftstofftanks. Auf diese Weise kann ein zu hoher Druck in dem Kraftstofftank durch die Entlüftungseinrichtung reduziert werden. Zu diesem Zweck entlüftet die Entlüftungseinrichtung den Kraftstofftank beispielsweise durch eine Entlüftungsleitung. Bei dem Entlüften kann durch die Entlüftungseinrichtung beziehungsweise die Entlüftungsleitung sowohl gasförmiger als auch flüssiger Kraftstoff aus dem Kraftstofftank heraus gelangen. Der entlüftete Kraftstoff liegt also zunächst als Gemisch aus gasförmigem und flüssigem Kraftstoff vor. Dies ist insbesondere dann der Fall, wenn das Entlüften des Kraftstofftanks bei hohem Kraftstofftankinnendruck durchgeführt wird. Dabei liegen, bedingt durch den hohen Druck beziehungsweise die große Druckdifferenz zwischen Kraftstofftankinnendruck und dem Druck außerhalb des Kraftstofftanks hohe Strömungsgeschwindigkeiten des entlüfteten Kraftstoffs vor, wodurch flüssiger Kraftstoff von dem gasförmigen Kraftstoff mitgerissen wird.

Der gasförmige Kraftstoff darf ohne weiteres der Brennkraftmaschine beziehungsweise deren Ansaugsystem zugeführt werden, wobei zwischen dem Kraftstofftank und der Brennkraftmaschine ein der Entlüftungseinrichtung zugeordneter Kraftstoffspeicher, welcher bevorzugt als Aktivkohlespeicher ausgebildet ist, angeordnet sein kann. Der Kraftstoffspeicher dient dazu, gasförmigen Kraftstoff zwischenzuspeichern, also aufzunehmen, wenn nicht benötigter gasförmiger Kraftstoff vorliegt und abzugeben, sobald der gasförmige Kraftstoff in die Brennkraftmaschine abgeführt werden kann. Es darf jedoch kein flüssiger Kraftstoff in den Kraftstoffspeicher beziehungsweise die Brennkraftmaschine gelangen.

Die Entlüftungseinrichtung kann aus diesem Grund zumindest eine Abscheidevorrichtung aufweisen, welche zur Trennung von gasförmigem und flüssigem Kraftstoff dient. Die Abscheidevorrichtung ist demnach dazu vorgesehen, das Überführen von flüssigem Kraftstoff von dem Kraftstofftank durch die Entlüftungseinrichtung in die Brennkraftmaschine beziehungsweise den Kraftstoffspeicher zu verhindern. Dabei scheidet die Abscheidevorrichtung flüssigen Kraftstoff ab und lässt gasförmigen Kraftstoff passieren. Der abgeschiedene flüssige Kraftstoff gelangt in einen Zwischenspeicher der Abscheidevorrichtung. Der Begriff Zwischenspeicher bedeutet dabei nicht, dass tatsächlich eine (Zwischen-) Speicherung des flüssigen Kraftstoffs vorgesehen ist. Vielmehr kann der flüssige Kraftstoff unmittelbar aus dem Zwischenspeicher beziehungsweise der Abscheidevorrichtung abgeführt werden, bevorzugt in Richtung des Kraftstofftanks. Dabei kann sich jedoch, beispielsweise durch eine Begrenzung des Abführvolumenstroms, insbesondere durch einen Leitungsquerschnitt oder dergleichen, ein Anstieg des Füllstands des Zwischenspeichers ergeben. Der abgeschiedene flüssige Kraftstoff kann demnach zumindest zeitweise nicht so schnell abgeführt werden, wie er in den Zwischenspeicher eingebracht wird. Selbstverständlich ist auch eine Zwischenspeicherung des flüssigen Kraftstoffs, beispielsweise über eine bestimmte Zeitspanne, realisierbar.

Beim Betreiben des Kraftstoffsystems sollte verhindert werden, dass die sich in dem Zwischenspeicher beziehungsweise der Abscheidevorrichtung befindliche Menge des flüssigen Kraftstoffs eine Grenzmenge überschreitet, der Füllstand des Zwischenspeichers demnach größer als ein Grenzfüllstand wird, weil dies die Wirksamkeit der Abscheidevorrichtung beeinträchtigen kann. Je größer die Menge flüssigen Kraftstoffs in dem Zwischenspeicher ist, umso größer wird das Risiko, dass zusammen mit dem gasförmigen Kraftstoff auch flüssiger Kraftstoff wieder aus der Abscheidevorrichtung heraus gelangt und in Richtung des Kraftstoffspeichers beziehungsweise der Brennkraftmaschine mitgenommen wird. Aus diesem Grund kann der Abscheidevorrichtung die Kraftstofffördereinrichtung zugeordnet werden. Diese wird dazu eingesetzt, flüssigen Kraftstoff aus dem Zwischenspeicher zu fördern, insbesondere in Richtung des Kraftstofftanks. Die Kraftstofffördereinrichtung ist dabei üblicherweise als Saugstrahlpumpe ausgebildet, wobei als Betriebsmittel der Saugstrahlpumpe häufig Kraftstoff verwendet wird, welcher von einer Kraftstoffpumpe des Kraftstoffsystems aus dem Kraftstofftank in Richtung der Brennkraftmaschine gefördert wird.

Bei bekannten Verfahren zum Betreiben des Kraftstoffsystems der Brennkraftmaschine erfolgt das Entlüften des Kraftstofftanks mittels der Entlüftungseinrichtung üblicherweise aufgrund des Kraftstofftankinnendrucks und einer Temperatur. Das bedeutet, dass das Entlüftungsventil der Entlüftungseinrichtung anhand des Kraftstofftankinnendrucks und der Temperatur zum Entlüften des Kraftstofftanks eingestellt wird. Dies ist jedoch nur bei aktivierter Brennkraftmaschine möglich, weil nur in diesem Fall ein der Brennkraftmaschine beziehungsweise dem Kraftstoffsystem zugeordnetes Steuergerät aktiviert ist. Dieses Steuergerät dient dazu, das Entlüftungsventil anhand des Kraftstofftankinnendrucks und der Temperatur zum Entlüften des Kraftstofftanks einzustellen. In Stillstandsphasen, also bei deaktivierter Brennkraftmaschine und damit deaktiviertem Steuergerät, wird der Kraftstofftankinnendruck üblicherweise durch mindestens ein mechanisches Überströmventil begrenzt, welches auf ein typisches Druckniveau ausgelegt ist. Verändert sich nun die Temperatur in dem Kraftstofftank, beispielsweise durch Wärmeeintrag durch die noch betriebswarme Brennkraftmaschine oder durch äußere Einflüsse, so stellt sich ein mit dem Dampfdruck des Kraftstoffs korrelierender Kraftstofftankinnendruck in dem Tank ein. Erreicht beziehungsweise überschreitet dieser das typische Druckniveau, und insbesondere einen definierten maximalen Kraftstofftankinnendruck, so öffnet sich das Überströmventil zum Entlüften des Kraftstofftanks. Unter einer deaktivierter Brennkraftmaschine ist dabei eine Brennkraftmaschine im Stillstand zu verstehen, während eine aktivierte Brennkraftmaschine zumindest im Leerlauf betrieben wird, insbesondere ein Drehmoment zur Verfügung stellt

Bei deaktivierter Brennkraftmaschine erfolgt somit das Entlüften des Kraftstofftanks aufgrund ausschließlich des Kraftstofftankinnendrucks. Häufig ist es jedoch der Fall, dass sich der zulässige maximale Kraftstofftankinnendruck mit der Temperatur verändert, also von dieser abhängig ist. Insbesondere bei deaktivierter Brennkraftmaschine, wenn der Kraftstofftankinnendruck lediglich über das Überströmventil abgebaut werden kann, kann es demnach dazu kommen, dass der Kraftstofftank mit einem Kraftstofftankinnendruck beaufschlagt wird, welcher Kräfte oberhalb einer Festigkeit des Kraftstofftanks bewirkt. Dies führt beispielsweise zu nicht akzeptablem Fließverhalten beziehungsweise zu ungewollten, nicht reversiblen Deformationen des Kraftstofftanks, insbesondere einer Kraftstofftankschale.

Beispielsweise ist aus der DE 10 2009 009 901 A1 ein Verfahren zur Ansteuerung eines Tankentlüftungssystems eines Kraftfahrzeugs bekannt. Dabei mündet eine Tankentlüftungsleitung in einen Speicherbehälter für Kraftstoffdämpfe, welcher über eine Spülluftleitung mit einem darin angeordneten Tankentlüftungsventil mit einem Verbrennungsmotor verbunden ist. Zudem wird ein in der Tankentlüftungsleitung vorgesehenes Tankabsperrventil in Abhängigkeit vom gemessenen Druck innerhalb des Kraftstofftanks geöffnet oder geschlossen. Es ist nun vorgesehen, dass das Tankabsperrventil bei abgestelltem Fahrzeug geöffnet ist und bei Betrieb des Kraftfahrzeugs in möglichst vielen Betriebspunkten geschlossen gehalten wird. Auch während des Betriebs des Kraftfahrzeugs wird es jedoch stets dann geöffnet, wenn der Druck innerhalb des Kraftstofftanks oberhalb eines vorgegebenen Grenzwerts liegt oder wenn die Temperatur des Kraftstofftanks oder des darin enthaltenen Kraftstoffs oberhalb eines oberen Schwellwerts liegt.

Es ist demnach Aufgabe der Erfindung, ein Verfahren zum Betreiben eines Kraftstoffsystems einer Brennkraftmaschine vorzuschlagen, welches die genannten Nachteile nicht aufweist, sondern ein zuverlässiges Betreiben des Kraftstoffsystems, insbesondere auch bei deaktivierter Brennkraftmaschine, ermöglicht.

Dies wird erfindungsgemäß erreicht, indem in einer ersten Betriebsart anhand ausschließlich einer Temperatur das Entlüftungsventil zum Entlüften des Kraftstofftanks eingestellt wird, und/oder indem bei einem Deaktivieren der Brennkraftmaschine das Entlüften über einen bestimmten Zeitraum erfolgt. Das Entlüftungsventil kann üblicherweise zum Entlüften oder Verschließen des Kraftstofftanks eingestellt werden. Unter einem Verschließen des Kraftstofftanks ist dabei ein Verschließen des Entlüftungsventils zu verstehen; der Kraftstofftank muss also auch nach dem Verschließen nicht hermetisch dicht sein. Auch bei einem Verschließen des Kraftstofftanks mittels des Entlüftungsventils kann demnach an anderer Stelle, nicht jedoch über das Entlüftungsventil, dem Kraftstofftank Kraftstoff entnommen oder zugeführt werden.

Das Einstellen des Entlüftungsventils zum Entlüften des Kraftstofftanks ausschließlich anhand der Temperatur ist bei deaktivierter Brennkraftmaschine vorgesehen. Es ist also nicht, wie aus dem Stand der Technik bekannt, vorgesehen, dass das Entlüftungsventil zum Entlüften des Kraftstofftanks eingestellt wird, sobald der Kraftstofftankinnendruck einen bestimmten Kraftstofftankinnendruck, insbesondere einen maximalen Kraftstofftankinnendruck, übersteigt. Vielmehr erfolgt das Einstellen des Entlüftungsventils im Wesentlichen unabhängig von dem Kraftstofftankinnendruck, sondern aufgrund lediglich der Temperatur. Ist die Brennkraftmaschine dagegen aktiviert, befindet sich also zumindest im Leerlaufbetrieb, ist es zwar möglich, die erste Betriebsart auszuwählen, bevorzugt wird jedoch eine von dieser unterschiedliche Betriebsart, bei welcher das Entlüftungsventil anhand ausschließlich eines Drucks beziehungsweise sowohl anhand der Temperatur als auch des Drucks zum Entlüften des Kraftstofftanks eingestellt wird.

Selbstverständlich kann das Entlüftungsventil auch in der ersten Betriebsart derart ausgebildet sein, dass es neben der Temperatur aufgrund zumindest des Kraftstofftankinnendrucks zum Entlüften des Kraftstofftanks eingestellt wird. Es kann demnach vorgesehen sein, dass das Entlüftungsventil in der ersten Betriebsart anhand ausschließlich der Temperatur zum Entlüften des Kraftstofftanks einstellbar ist. Es ist also stets vorgesehen, dass das Entlüftungsventil anhand ausschließlich der Temperatur, unabhängig von dem Kraftstofftankinnendruck, zum Entlüften des Kraftstofftanks einstellbar ist. Zusätzlich kann das Entlüften jedoch unabhängig von dem durch die Temperatur bewirkten Entlüften auch durch den Kraftstofftankinnendruck bewirkt sein. Es erfolgt demnach ein Entlüften entweder aufgrund ausschließlich der Temperatur oder aufgrund ausschließlich des Kraftstofftankinnendrucks, nicht jedoch aufgrund beider Parameter, beispielsweise aufgrund eines Kraftstofftankinnendrucks, welcher in Abhängigkeit der Temperatur gewählt ist. Somit kann das Entlüftungsventil beispielsweise zum Entlüften eingestellt werden, wenn die Temperatur eine bestimmte Temperatur überschreitet, ohne dass der Druck, insbesondere der Kraftstofftankinnendruck, größer als ein bestimmter Druck ist, oder wenn der Druck den bestimmten Druck überschreitet, ohne dass die Temperatur größer ist als die bestimmte Temperatur. Alternativ oder zusätzlich kann es jedoch auch vorgesehen sein, dass das Entlüftungsventil sowohl anhand der Temperatur als auch des Drucks eingestellt wird. Dabei wird beispielsweise der Druck, bei welcher das Entlüftungsventil zum Entlüften eingestellt wird, in Abhängigkeit der Temperatur oder die Temperatur, bei welcher das Entlüften erfolgen soll, in Abhängigkeit des Drucks gewählt.

Zusätzlich oder alternativ kann es vorgesehen sein, dass bei dem Deaktivieren der Brennkraftmaschine das Entlüften über den bestimmten Zeitraum erfolgt. Bevorzugt erfolgt das Entlüften unmittelbar bei dem Deaktivieren. Somit wird der Kraftstofftank entlüftet, wenn die Brennkraftmaschine deaktiviert wird, also von einem aktivierten in einen deaktivierten Zustand übergeht. Es kann auch vorgesehen sein, dass das Entlüften unmittelbar vor, insbesondere bis zu dem Deaktivieren der Brennkraftmaschine vorgesehen ist. Darunter ist zu verstehen, dass das Entlüften ununterbrochen zumindest bis zum Deaktivieren der Brennkraftmaschine erfolgt. Das Entlüften ist über den bestimmten Zeitraum vorgesehen. Dieser Zeitraum kann eine vorbestimmte Zeitspanne umfassen. Alternativ kann das Entlüften auch bis zu einem erneuten Aktivieren der Brennkraftmaschine vorgesehen sein.

Das Entlüften über einen bestimmten Zeitraum bei einem Deaktivieren der Brennkraftmaschine ist insbesondere bei und/oder in einer bestimmten Zeitspanne nach einem Unterschreiten beziehungsweise Überschreiten einer Grenztemperatur durch die Temperatur vorgesehen. Es ist also beispielsweise nur dann vorgesehen, den Kraftstofftank bei dem Deaktivieren der Brennkraftmaschine zu Entlüften, wenn zuvor, innerhalb der bestimmten Zeitspanne vor dem Deaktivieren, die Grenztemperatur durch die Temperatur unterschritten beziehungsweise überschritten wurde. Insbesondere wird bei einem Unterschreiten beziehungsweise Überschreiten der Grenztemperatur durch die Temperatur ein Merker gesetzt und nach Ablauf der bestimmten Zeitspanne, sollte das Unterschreiten beziehungsweise Überschreiten nicht mehr vorliegen, wieder zurückgesetzt. Soll nun die Brennkraftmaschine deaktiviert werden, so erfolgt das Entlüften über den bestimmten Zeitraum nur dann, wenn der Merker gesetzt ist.

Eine andere, alternative Möglichkeit ist es, ein den Druck auswertendes Steuergerät, welches beispielsweise der Brennkraftmaschine zugeordnet ist, auch nach dem Deaktivieren der Brennkraftmaschine zumindest über einen gewissen Zeitraum zu betreiben. Üblicherweise wird das Steuergerät zusammen mit der Brennkraftmaschine deaktiviert, so dass mit dem Deaktivieren der Brennkraftmaschine das Steuergerät funktionslos wird. Hier kann es jedoch vorgesehen sein, dass das Steuergerät weiterhin betrieben wird. Dies ist insbesondere bis zu einem Zeitpunkt vorgesehen, zu dem davon ausgegangen werden kann, dass sich der Druck nicht mehr aufgrund eines Wärmeeintrags durch die Brennkraftmaschine soweit erwärmt, dass es zu einer Beschädigung des Kraftstofftanks kommt.

Mit dieser Vorgehensweise kann zuverlässig das Auftreten eines unzulässig hohen Kraftstofftankinnendrucks vermieden werden, insbesondere auch bei deaktivierter Brennkraftmaschine. Alternativ kann auch das Belüften des Kraftstofftanks unterbrochen werden, wenn die Temperatur die Grenztemperatur überschreitet. Auf diese Weise wird das Entweichen von Kraftstoff durch übermäßiges Ausgasen bei hohen Temperaturen vermieden. Ebenso kann das Belüften bei dem Unterschreiten der Grenztemperatur durchgeführt werden, um den Kraftstofftank vor dem Auftreten eines zu hohen Kraftstofftankinnendrucks bei sehr tiefen Temperaturen zu schützen. Das beschriebene Verfahren, insbesondere das Einstellen des Entlüftungsventils nur aufgrund der Temperatur, kann demnach für eine Vielzahl von Anwendungsfällen eingesetzt werden.

Eine Weiterbildung der Erfindung sieht vor, dass das Entlüftungsventil bei einem Überschreiten beziehungsweise Unterschreiten einer Grenztemperatur zum Entlüften des Kraftstofftanks eingestellt wird. Das Entlüften mittels des Entlüftungsventils erfolgt also bei dem Überschreiten der Grenztemperatur oder alternativ bei dem Unterschreiten. Es können auch mehrere Entlüftungsventile vorgesehen sein, wobei zumindest eines bei Überschreiten einer ersten Grenztemperatur (Maximaltemperatur) und zumindest ein anderes bei Unterschreiten einer zweiten Grenztemperatur (Minimaltemperatur) zum Entlüften des Kraftstofftanks eingestellt wird. Auf diese Weise können Beschädigungen des Kraftstofftanks sowohl aufgrund sehr niedriger als auch sehr hoher Temperaturen und dem damit einhergehenden hohen Kraftstofftankinnendruck vermieden werden.

Eine Weiterbildung der Erfindung sieht vor, dass in einer zweiten Betriebsart anhand ausschließlich eines Drucks, insbesondere eines Kraftstofftankinnendrucks, das Entlüftungsventil zum Entlüften des Kraftstofftanks eingestellt wird. Dabei kann die zweite Betriebsart beispielsweise bei aktivierter Brennkraftmaschine gewählt sein, so dass in diesem Fall das Entlüften des Kraftstofftanks ausschließlich aufgrund des Drucks erfolgt.

Eine Weiterbildung der Erfindung sieht vor, dass in einer dritten Betriebsart sowohl anhand der Temperatur als auch des Drucks das Entlüftungsventil zum Entlüften des Kraftstofftanks eingestellt wird. Auch die dritte Betriebsart kann beispielsweise bei aktivierter Brennkraftmaschine gewählt sein. Hier ist es vorgesehen, dass zum Einstellen des Entlüftungsventils sowohl die Temperatur als auch der Druck herangezogen werden. Zusätzlich können selbstverständlich auch weitere Größen verwendet werden.

Eine Weiterbildung der Erfindung sieht vor, dass der bestimmte Zeitraum derart gewählt wird, dass der Kraftstofftankinnendruck um einen bestimmten Differenzdruck reduziert wird. Insbesondere bei deaktivierter Brennkraftmaschine kann der bestimmte Zeitraum auch in Abhängigkeit von einem Speichervermögen eines Kraftstoffspeichers gewählt sein, welcher zur (Zwischen-) Speicherung von gasförmigem Kraftstoff dient. Der Kraftstoffspeicher ist bevorzugt strömungstechnisch nach dem Entlüftungsventil vorgesehen, so dass beim Entlüften des Kraftstofftanks entlüfteter Kraftstoff über das Entlüftungsventil in den Kraftstoffspeicher gelangen kann. Der bestimmte Zeitraum ist insbesondere derart gewählt, dass auch nach einem Beenden des Entlüftens und bei deaktivierter Brennkraftmaschine davon ausgegangen werden kann, dass der Kraftstofftankinnendruck dauerhaft unterhalb des maximal zulässigen Kraftstofftankinnendrucks verbleibt. Der bestimmte Zeitraum kann auch derart gewählt sein, dass der Kraftstofftankinnendruck auf einen Umgebungsdruck des Kraftstoffsystems gebracht wird.

Eine Weiterbildung der Erfindung sieht vor, dass als Temperatur eine Umgebungstemperatur, einen Kraftstofftankinnentemperatur, eine Kraftstofftemperatur, eine Entlüftungsventiltemperatur, eine Leitungstemperatur oder eine Abscheidevorrichtungstemperatur verwendet wird. Prinzipiell kann die Temperatur demnach eine beliebige, für den Kraftstofftank beziehungsweise den Kraftstoff relevante Temperatur sein. Besonders bevorzugt ist die Temperatur jedoch eine Kraftstofftanktemperatur beziehungsweise die Kraftstofftankinnentemperatur. Letztere kann, muss jedoch nicht der Kraftstofftemperatur entsprechen. Alternativ kann auch die Temperatur des Entlüftungsventils oder die Temperatur einer, insbesondere kraftstoffführenden, Leitung herangezogen werden. Auch die Temperatur einer Abscheidevorrichtung kann verwendet werden. Die Abscheidevorrichtung dient dabei üblicherweise der Trennung von gasförmigem und flüssigem Kraftstoff, um das Überführen von flüssigem Kraftstoff von dem Kraftstofftank durch die Entlüftungseinrichtung in die Brennkraftmaschine beziehungsweise den Kraftstoffspeicher zu verhindern. Die Abscheidevorrichtung kann strömungstechnisch vor oder nach dem Entlüftungsventil vorgesehen sein und ist üblicherweise der Entlüftungseinrichtung zugeordnet. Bevorzugt wird die Temperatur durch Messung bestimmt. Sie kann zusätzlich einer Korrektur unterzogen werden, beispielsweise der Addition einer Offsettemperatur.

Eine Weiterbildung der Erfindung sieht vor, dass zumindest bei deaktivierter Brennkraftmaschine ein Steuergerät die Temperatur auswertet und das Entlüftungsventil entsprechend einstellt, und dass das Steuergerät oder ein weiteres Steuergerät ausschließlich bei aktivierter Brennkraftmaschine zumindest den Druck auswertet und das Entlüftungsventil entsprechend einstellt. Demnach ist zumindest das eine Steuergerät vorgesehen, welches der Brennkraftmaschine oder dem Kraftstoffsystem zugeordnet ist. Das Steuergerät soll bei deaktivierter Brennkraftmaschine die Temperatur auswerten und das Entlüftungsventil gemäß den vorstehenden Ausführungen einstellen. Zugleich ist das Steuergerät oder das weitere Steuergerät dazu vorgesehen, bei aktivierter Brennkraftmaschine zumindest den Druck und vorzugsweise die Temperatur auszuwerten und ebenfalls das Entlüftungsventil entsprechend einzustellen. Es kann also vorgesehen sein, dass bei deaktivierter Brennkraftmaschine ausschließlich das eine Steuergerät aktiviert ist, während bei aktivierter Brennkraftmaschine sowohl das eine als auch das weitere Steuergerät aktiviert sind, also dem Einstellen des Entlüftungsventils dienen. Ebenso ist es vorstellbar, dass bei deaktivierter Brennkraftmaschine ausschließlich das eine Steuergerät und bei aktivierter Brennkraftmaschine ausschließlich das weitere Steuergerät aktiviert ist, so dass jeweils das eine oder das weitere Steuergerät für das Einstellen des Entlüftungsventils verwendet wird. In einer besonders vorteilhaften Ausführungsform ist lediglich das eine Steuergerät vorgesehen, welches in diesem Fall bei deaktivierter Brennkraftmaschine das Entlüftungsventil anhand ausschließlich der Temperatur und bei aktivierter Brennkraftmaschine zumindest anhand des Drucks einstellt.

Eine Weiterbildung der Erfindung sieht vor, dass das Entlüftungsventil in ein in Abhängigkeit des Kraftstofftankfüllstands schaltendes Belüftungsventil, in ein dem Kraftstofftank zugeordnetes Sicherheitsventil, in einen Tankdeckel des Kraftstofftanks, in eine Abscheidevorrichtung, in den Kraftstofftank oder in ein Überströmventil integriert oder einem solchen strömungstechnisch vor-, nach- oder parallel geschaltet wird. Die Integration in eines der vorgenannten Elemente ermöglicht eine äußerst platzsparende und damit kostengünstige Ausführung des Entlüftungsventils. Selbstverständlich kann das Entlüftungsventil auch als separates Element vorliegen und dem genannten Elementen strömungstechnisch zugeordnet sein. Das Belüftungsventil ist insbesondere als FLW (Fill Limit Venting Valve) ausgebildet. Ein solches ermöglicht ein Belüften des Kraftstofftanks, solange der Kraftstofftankfüllstand kleiner ist als ein bestimmter Kraftstofftankfüllstand, insbesondere Kraftstofftankmaximalfüllstand. Über das Belüftungsventil wird somit das Belüften des Kraftstofftanks, insbesondere bei einem Zuführen von Kraftstoff in den Kraftstofftank, sichergestellt. Das Sicherheitsventil liegt beispielsweise als Überroll-Sicherheitsventil beziehungsweise ROV (Roll Over Valve) vor. Sowohl das Belüftungsventil als auch das Sicherheitsventil sind üblicherweise dem Kraftstofftank zugeordnet und der Abscheidevorrichtung strömungstechnisch vorgeschaltet, so dass der Kraftstoff zunächst das Belüftungsventil beziehungsweise das Sicherheitsventil durchläuft, bevor es in die Abscheidevorrichtung gelangt. Das Überströmventil liegt beispielsweise als Druckbegrenzungsventil vor, ist also derart ausgebildet, dass es eine Strömungsverbindung zwischen seinem Eingang und seinem Ausgang nur dann herstellt, wenn die Druckdifferenz zwischen diesen einen bestimmten Wert überschreitet.

Eine Weiterbildung der Erfindung sieht vor, dass das Entlüftungsventil zumindest ein Temperaturformänderungselement, insbesondere Temperaturdehnelement, bevorzugt ein Wachsdehnelement oder ein Bimetallelement, aufweist. Auf diese Weise kann das Einstellen des Entlüftungsventils zur Entlüftung des Kraftstofftanks ausschließlich mechanisch erfolgen, ohne dass eine elektrische oder elektronische Ansteuerung des Entlüftungsventils notwendig ist. Das Einstellen ist demnach mittels des Temperaturformänderungselements vorgesehen. Das Temperaturformänderungselement ist dabei ein Element, welches seine Form in Abhängigkeit von der Temperatur ändert. Es kann beispielsweise als Temperaturdehnelement vorliegen, welches zumindest seine Länge mit ansteigender Temperatur vergrößert. Das Temperaturformänderungselement kann beispielsweise als Wachsdehnelement oder als Bimetallelement vorliegen. Das Wachsdehnelement ist beispielsweise eine mit Wachs gefüllte Kapsel, deren Füllvolumen sich in Abhängigkeit von der Temperatur vergrößert oder verkleinert und dadurch das Entlüftungsventil zum Entlüften beziehungsweise Verschließen des Kraftstofftanks eingestellt.

Die Erfindung betrifft weiterhin ein Kraftstoffsystem einer Brennkraftmaschine, insbesondere zur Durchführung des Verfahrens gemäß den vorstehenden Ausführungen, wobei das Kraftstoffsystem über einen Kraftstofftank und eine mindestens ein Entlüftungsventil aufweisende Entlüftungseinrichtung zur Entlüftung des Kraftstofftanks verfügt. Dabei ist vorgesehen, dass das Kraftstoffsystem dazu ausgebildet ist, in einer ersten Betriebsart anhand ausschließlich einer Temperatur das Entlüftungsventil zum Entlüften des Kraftstofftanks einzustellen, und/oder dass bei einem Deaktivieren der Brennkraftmaschine das Entlüften über einen bestimmten Zeitraum vorgesehen ist. Das Kraftstoffsystem kann gemäß den vorstehenden Ausführungen weitergebildet sein.

Die Erfindung betrifft auch ein Antriebssystem mit einem Kraftstoffsystem gemäß den vorstehenden Ausführungen, welches insbesondere gemäß dem vorstehend beschriebenen Verfahren betrieben wird beziehungsweise betreibbar ist. Das Antriebssystem verfügt dabei insbesondere über zumindest eine Brennkraftmaschine und ist beispielsweise als Hybridantriebssystem ausgebildet.

Die Erfindung wird nachfolgend anhand der in der Zeichnung dargestellten Ausführungsbeispiele näher erläutert, ohne dass eine Beschränkung der Erfindung erfolgt. Dabei zeigen:
- Figur 1: eine schematische Darstellung eines Kraftstoffsystems einer Brennkraftmaschine mit einer Entlüftungseinrichtung, die mindestens ein Entlüftungsventil zur Entlüftung eines Kraftstofftanks aufweist, wobei das Entlüftungsventil elektrisch betätigbar ist,
- Figur 2: eine erste mechanische Ausführungsform des Entlüftungsventils,
- Figur 3: eine zweite mechanische Ausführungsform des Entlüftungsventils,
- Figur 4: eine dritte mechanische Ausführungsform des Entlüftungsventils,
- Figur 5: eine vierte mechanische Ausführungsform des Entlüftungsventils,
- Figur 6: eine fünfte mechanische Ausführungsform des Entlüftungsventils in einem ersten Zustand,
- Figur 7: das aus der Figur 6 bekannte Entlüftungsventil in einem zweiten Zustand, und
- Figur 8: eine sechste mechanische Ausführungsform des Entlüftungsventils.

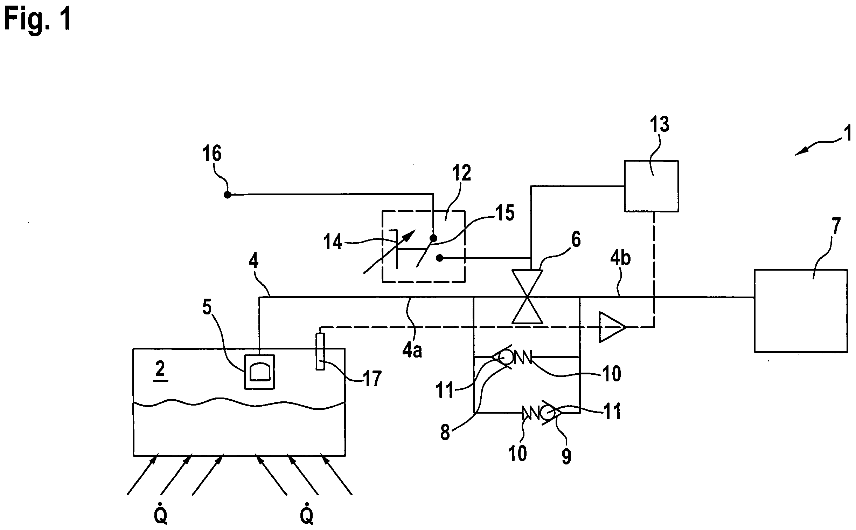

Die Figur 1 zeigt eine schematische Darstellung eines Kraftstoffsystems 1. Das Kraftstoffsystem 1 ist beispielsweise Bestandteil eines Kraftfahrzeugs beziehungsweise eines Antriebssystems des Kraftfahrzeugs. Das Kraftstoffsystem 1 verfügt über einen Kraftstofftank 2 und eine Entlüftungseinrichtung 3 zur Entlüftung des Kraftstofftanks 2. Die Entlüftungseinrichtung 3 kann eine hier nicht dargestellte Abscheidevorrichtung aufweisen. Die Abscheidevorrichtung dient dazu, flüssigen Kraftstoff aus einem Gemisch von flüssigem und gasförmigem Kraftstoff abzuscheiden. Der abgeschiedene flüssige Kraftstoff liegt anschließend in einem Zwischenspeicher der Abscheidevorrichtung vor und kann, beispielsweise durch eine Rückführungsleitung, wieder dem Kraftstofftank 2 zugeführt werden. Die Rückführungsleitung weist bevorzugt ein Ventil, insbesondere Drainageventil beziehungsweise Rückschlagventil, auf. Anstelle der Rückführungsleitung kann auch lediglich das Ventil vorgesehen sein, insbesondere wenn die Abscheidevorrichtung zumindest bereichsweise in dem Kraftstofftank 2 vorliegt, so dass durch das Ventil aus dem Zwischenspeicher austretender Kraftstoff unmittelbar in den Kraftstofftank 2 gelangt. Das Ventil ist derart ausgebildet, dass Kraftstoff durch die Rückführungsleitung lediglich aus dem Zwischenspeicher herausgelangen, nicht jedoch in ihn hineingelangen kann. Somit wird verhindert, dass durch die Rückführungsleitung Kraftstoff aus dem Kraftstofftank 2 in den Zwischenspeicher gelangt.

Die Entlüftungseinrichtung 3 steht über eine Entlüftungsleitung 4 in Strömungsverbindung mit dem Kraftstofftank 2. Auf der dem Kraftstofftank 2 zugewandten Seite der Entlüftungsleitung 4 beziehungsweise in dem Kraftstofftank 2 ist dabei ein Belüftungsventil 5 vorgesehen, welches in Abhängigkeit des Kraftstofftankfüllstands schaltet. Das Belüftungsventil 5 ist jedoch optional, das Kraftstoffsystem 1 kann demnach auch ohne dieses vorliegen. Üblicherweise ist das Belüftungsventil 5 derart ausgeführt, dass es nur bei einem Kraftstofftankfüllstand unterhalb eines bestimmten Kraftstofftankfüllstands, insbesondere eines Maximalkraftstofftankfüllstands, geöffnet ist, also Kraftstoff, insbesondere gasförmiger Kraftstoff, aus dem Kraftstofftank 2 in die Entlüftungsleitung 4 gelangen kann. Die Entlüftungsleitung 4 weist ein Entlüftungsventil 6 auf, welches mittels einer hier nicht dargestellten Betätigungseinrichtung betätigbar ist. Das Entlüftungsventil 6 und die Betätigungseinrichtung sind dabei bevorzugt derart ausgebildet, dass der Durchströmungsquerschnitt des Entlüftungsventils 6 stetig einstellbar ist. Auf der dem Kraftstofftank 2 abgewandten Seite mündet die Entlüftungsleitung 4 in einen Kraftstoffspeicher 7, insbesondere einen Aktivkohlespeicher, ein. Der Kraftstoffspeicher 7 dient der Zwischenspeicherung von gasförmigem Kraftstoff.

Dem Entlüftungsventil 6 sind zwei Überströmventile 8 und 9 parallel geschaltet. Die Überströmventile 8 und 9 weisen jeweils einen von einer Feder 10 federkraftbeaufschlagten Schließkörper 11 auf. Sie sind derart ausgebildet, dass sie entgegengesetzte Durchströmungsrichtungen ermöglichen. Die Überströmventile 8 und 9 öffnen beziehungsweise schließen in Abhängigkeit von einer Druckdifferenz zwischen einem ersten, auf einer Seite des Entlüftungsventils 6 angeordneten Abschnitt 4a der Entlüftungsleitung 4 und einem zweiten, auf der gegenüberliegenden Seite des Entlüftungsventils 6 angeordneten Abschnitt 4b. Das Überströmventil 8 öffnet, sobald in dem Abschnitt 4a ein Druck vorliegt, welcher eine Kraft auf den Schließkörper 11 des Überströmventil 8 bewirkt, welche größer ist als eine von einem in dem Abschnitt 4b vorliegenden Druck bewirkte Kraft zuzüglich der Federkraft der Feder 10 des Überströmventils 8. Das Überströmventil 9 öffnet dagegen, wenn die von dem Druck in dem Abschnitt 4b bewirkte Kraft größer ist als die von dem in dem Abschnitt 4a vorliegenden Druck bewirkte Kraft zuzüglich der Federkraft der Feder 10 des Überströmventil 9. Mittels der Überströmventile 8 und 9 kann damit das Entlüftungsventil 6 umgangen werden, wenn auf einer Seite des Entlüftungsventils 6 ein zu hoher Druck vorliegen sollte.

Das Entlüftungsventil 6 ist an ein Steuergerät 12 und ein weiteres Steuergerät 13 angeschlossen. Das Steuergerät 12 ist dabei auch dann aktiviert, wenn die Brennkraftmaschine deaktiviert ist, während das weitere Steuergerät 13 ausschließlich bei aktivierter Brennkraftmaschine aktiviert ist. Das Steuergerät 12 weist einen Temperatureingang 14 auf, an welchen ein hier nicht dargestellter Temperatursensor angeschlossen ist. An dem Temperatureingang 14 liegt demnach ein Temperatursignal an, welches beispielsweise eine Temperatur des Kraftstofftanks 2, beispielsweise die Kraftstofftemperatur, wiedergibt. Das Steuergerät 12 weist einen Temperaturschalter 15 auf, welcher ausschließlich aufgrund der über den Temperatureingang 14 übermittelten Temperatur eine elektrische Verbindung zwischen einem Anschluss 16, beispielsweise einem Dauerplus eines Fahrzeugs, und dem Entlüftungsventil 6 herstellt. Bei geschlossenem Temperaturschalter 15 wird insofern ein Entlüften des Kraftstofftanks 2 über das Entlüftungsventil 6 bewirkt, bei geöffnetem Temperaturschalter 15 kann das Entlüftungsventil 6 dagegen geschlossen sein, so dass kein Entlüften des Kraftstofftanks 2 durchgeführt wird.

Das weitere Steuergerät 13 ist an einen Drucksensor 17 angeschlossen, mittels welchem ein Kraftstofftankinnendruck des Kraftstofftanks 2 bestimmbar ist. Das weitere Steuergerät 13 ist dazu ausgeführt, das Entlüftungsventil 6 aufgrund zumindest des Kraftstofftankinnendrucks, insbesondere aufgrund lediglich des Kraftstofftankinnendrucks, einzustellen. Es ist nun vorgesehen, dass bei deaktivierter Brennkraftmaschine das Steuergerät 12 ausschließlich die Temperatur auswertet, welche über den Temperatureingang 14 bereitgestellt wird und das Entlüftungsventil entsprechend der Temperatur einstellt. Dagegen wertet das weitere Steuergerät 13 ausschließlich bei aktivierter Brennkraftmaschine den mittels des Drucksensors 17 bestimmten Druck aus und stellt das Entlüftungsventil 6 ebenfalls entsprechend ein. Das Belüften des Kraftstofftanks 2 mittels des Belüftungsventils 6 erfolgt somit entweder durch das Steuergerät 12 oder das weitere Steuergerät 13. Es ist demnach ausreichend, wenn lediglich eines dieser Steuergeräte 12 und 13 das Entlüftungsventil 6 zum Entlüften einstellt, um das Entlüften des Kraftstofftanks 2 zu erreichen.

Bei deaktivierter Brennkraftmaschine liegt eine erste Betriebsart vor, in welcher ausschließlich anhand der Temperatur das Entlüftungsventil 6 zur Entlüftung des Kraftstofftanks 2 eingestellt wird. Bei aktivierter Brennkraftmaschine liegt dagegen eine zweite Betriebsart vor, in der das weitere Steuergerät 13 das Entlüftungsventil 6 ausschließlich anhand des Kraftstofftankinnendrucks zum Entlüften des Kraftstofftanks 2 einstellt. Alternativ kann es selbstverständlich vorgesehen sein, dass das weitere Steuergerät 13 beziehungsweise dessen Funktionalität in das Steuergerät 12 integriert ist.

Alternativ oder zusätzlich kann es vorgesehen sein, dass bei einem Deaktivieren der Brennkraftmaschine das weitere Steuergerät 13 das Entlüftungsventil 6 zu einem Entlüften des Kraftstofftanks 2 über einen bestimmten Zeitraum einstellt. In diesem Fall kann das Steuergerät 12 entfallen oder zusätzlich vorgesehen sein. Auf diese Weise kann trotz eines nach dem Deaktivieren der Brennkraftmaschine erfolgenden Wärmeeintrags in den Kraftstofftank 2 (angedeutet durch die Pfeile Q) eine unzulässige thermische Belastung des Kraftstofftanks 2 vermieden werden, weil unabhängig von dem Zustand des weiteren Steuergerät 13 das Entlüftungsventil 6 mittels des Steuergeräts 12 anhand ausschließlich der Temperatur zum Entlüften des Kraftstofftanks 2 einstellbar ist. Das hier dargestellte Entlüftungsventil 6 liegt in Form eines FTIV (Fuel Tank Isolation Valve) vor beziehungsweise ist in ein solches integriert. Das FTIV ist dabei elektronisch sowohl von dem Steuergerät 12 als auch dem weiteren Steuergerät 13 zum Belüften des Kraftstofftanks 2 einstellbar.

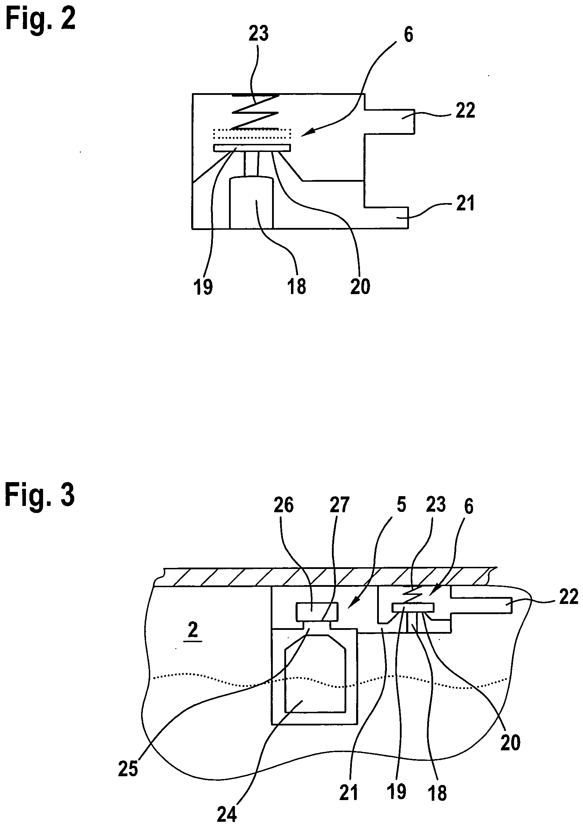

Im Gegensatz dazu zeigen die Figuren 2 bis 8 Ausführungsformen des Entlüftungsventils 6, welche von dem FTIV getrennt vorliegen. Sie sind damit bevorzugt derart in dem Kraftstoffsystem 1 der Figur 1 vorgesehen, dass sie dem FTIV parallel geschaltet sind, sofern ein solches überhaupt vorgesehen ist. Weil die anhand der Figuren 2 bis 8 beschriebenen Ausführungsformen des Entlüftungsventils 6 rein mechanisch arbeiten, entfällt das in der Figur 1 dargestellte Steuergerät 12, so dass das FTIV - sofern vorhanden - mittels des weiteren Steuergerät 13 zum Belüften des Kraftstofftanks 2 eingestellt wird, während das Entlüftungsventil 6 unabhängig von dem FTIV arbeitet. Die anhand der Figuren 2 bis 8 beschriebenen Entlüftungsventile 6 können beispielsweise das Überströmventil 8 ersetzen. Alternativ sind sie derart in dem Kraftstoffsystem 1 angeordnet, dass sie zum Belüften des Kraftstofftanks 2 eine Strömungsverbindung zwischen dem Kraftstofftank 2 und einer weiteren Einrichtung, beispielsweise dem Kraftstoffspeicher 7, herstellen können.

Die Figur 2 zeigt eine erste mechanische Ausführungsform des Entlüftungsventils 6. Das Entlüftungsventil 6 ist derart ausgebildet, dass es sowohl anhand ausschließlich einer Temperatur als auch anhand ausschließlich eines Drucks zum Belüften des Kraftstofftanks 2 einstellbar ist. Zum Einstellen anhand ausschließlich der Temperatur ist ein Temperaturformänderungselement 18 vorgesehen, welches als Wachsdehnelement ausgebildet ist. Das Temperaturformänderungselement 18 steht mit einem Schließkörper 19 des Entlüftungsventils 6 in Wirkverbindung. Es ist derart ausgebildet, dass es das Entlüftungsventil 6 bei einem Überschreiten einer Grenztemperatur ein Freigeben des Ventilsitzes 20 und damit einer Strömungsverbindung zwischen einem Eingang 21 und einem Ausgang 22 bewirkt. Der Schließkörper 19 befindet sich dabei in einer Offenposition, welche durch die punktierte Linie angedeutet ist. Der Eingang 21 ist dem Kraftstofftank 2 und der Ausgang 22 dem Kraftstoffspeicher 7 zugeordnet, so dass das Entlüften des Kraftstofftanks 2 in Richtung des Kraftstoffspeichers 7 erfolgt.

Das Temperaturformänderungselement 18 ist jedoch nicht fest mit dem Schließkörper 19 verbunden. Vielmehr erlaubt das Entlüftungsventil 6 auch, dass der Schließkörper 19 den Ventilsitz 20 unabhängig von dem Temperaturformänderungselement 18 freigibt, wenn eine von einem Differenzdruck zwischen dem Eingang 21 und dem Ausgang 22 auf den Schließkörper 19 ausgeübte Kraft die Federkraft einer Feder 23 übersteigt. Das Entlüftungsventil 6 gibt demnach die Strömungsverbindung zwischen Eingang 21 und Ausgang 22 sowohl aufgrund ausschließlich einer Temperatur als auch aufgrund ausschließlich eines Drucks beziehungsweise einer Druckdifferenz, jeweils im Wesentlichen unabhängig voneinander, frei. Die Feder 23 beziehungsweise die von dieser bewirkte Federkraft wirkt der Verlagerung des Schließkörpers durch das Temperaturformänderungselement 18 entgegen beziehungsweise drängt dieses in Richtung seiner Geschlossenposition (angedeutet durch die durchgehende Linie). Die Feder 23 ist beispielsweise derart gewählt, dass in einem normalen Betrieb des Kraftstoffsystems 1 der Schließkörper 19 ausschließlich aufgrund des Temperaturformänderungselements 18 aus dem Ventilsitz 20 gedrängt werden kann, nicht jedoch aufgrund von einer Druckdifferenz zwischen dem Eingang 21 und dem Ausgang 22. Erst bei einer Druckdifferenz, welche in einem normalen Betrieb nicht auftritt, ist somit ein Freigeben der Strömungsverbindung aufgrund ausschließlich des Drucks vorgesehen.

Die Figur 3 zeigt eine zweite mechanische Ausführungsform des Entlüftungsventils 6. In dieser ist das Entlüftungsventil 6 in das Belüftungsventil 5 integriert. Das Belüftungsventil 5 ist hier als FLVV (Fill Limit Venting Valve) ausgebildet. Ein solches ermöglicht ein Belüften des Kraftstofftanks 2, solange der Kraftstofftankfüllstand kleiner ist als ein bestimmter Kraftstofftankfüllstand, insbesondere Kraftstofftankmaximalfüllstand. Über das Belüftungsventil 5 wird somit das Belüften des Kraftstofftanks 2, insbesondere bei einem Zuführen von Kraftstoff in den Kraftstofftank 2, sichergestellt. Alternativ kann das Entlüftungsventil 6 in ein dem Kraftstofftank 2 zugeordnetes Sicherheitsventil integriert sein. Das Sicherheitsventil ist beispielsweise als Überroll-Sicherheitsventil beziehungsweise ROV (Roll-Over Valve) ausgebildet.

Das Belüftungsventil 5 weist entsprechend einen Schwimmer 24 auf, welcher in dem Kraftstofftank 2 angeordnet ist. Erreicht der Kraftstoff in dem Kraftstofftank 2 einen Kraftstofftankmaximalfüllstand, so verschließt der Schwimmer 24 einen Ventilsitz 25 des Belüftungsventils 5. Das Belüftungsventil 5 weist gleichzeitig die Funktion eines Überströmventils auf. Zu diesem Zweck ist ein Ventilkörper 26 vorgesehen, welcher bei Erreichen eines bestimmten Kraftstofftankinnendrucks aus einem Ventilsitz 27 heraus gedrängt wird. Auf diese Weise kann der Kraftstofftank 2 bei Erreichen des bestimmten Kraftstofftankinnendrucks entlüftet werden, nicht jedoch, wenn der Kraftstofftankfüllstand größer oder gleich dem Kraftstofftankmaximalfüllstand ist. Strömungstechnisch nach dem Schwimmer 24, den Ventilsitzen 25 und 27 und dem Ventilkörper 26 ist das Entlüftungsventil 6 in dem Belüftungsventil 5 integriert. Der Aufbau des Entlüftungsventils 6 entspricht im Wesentlichen dem anhand der Figur 2 beschriebenen, so dass insoweit auf die vorstehenden Ausführungen verwiesen sei. Prinzipiell kann jedoch jede der hier beschriebenen Ausführungsformen des Entlüftungsventils 6 in das Belüftungsventil 5 integriert sein.

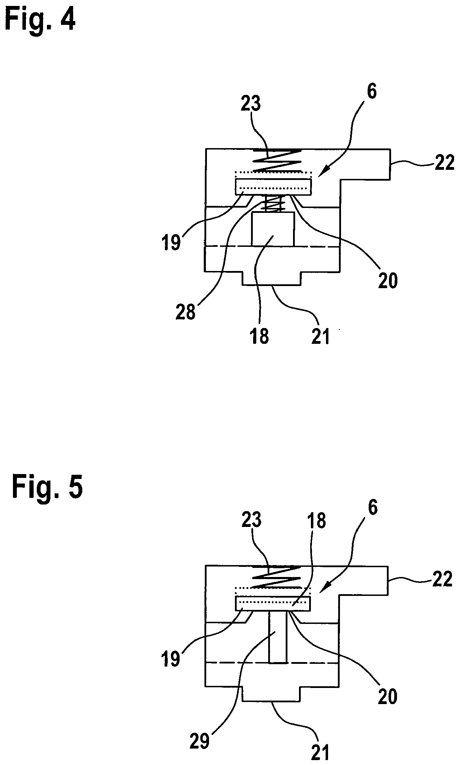

Die Figur 4 zeigt eine dritte mechanische Ausführungsform des Entlüftungsventils 6. Diese entspricht im Wesentlichen der anhand der Figur 2 beschriebenen, so dass auch hier auf die vorstehenden Ausführungen verwiesen sei. Wie in Figur 2 ist auch hier der Schließkörper 19 sowohl in seiner Geschlossenposition (durchgezogene Linie) als auch in seiner Offenposition (punktierte Linie) dargestellt. Im Unterschied zu der Ausführungsform, welche in der Figur 2 dargestellt ist, ist hier eine zweite Feder 28 vorgesehen, welche auf der der ersten Feder 23 gegenüberliegenden Seite des Schließkörpers 19 angeordnet ist. Die zweite Feder 28 stützt sich einerseits an dem Temperaturformänderungselement 18, andererseits an dem Schließkörper 19 auf. Die zweite Feder 28 wirkt demnach der Feder 23 entgegen. Auf diese Weise kann das Entlüftungsventil 6 derart eingestellt werden, dass der Schließkörper 19 sowohl aufgrund ausschließlich der Temperatur (mittels des Temperaturformänderungselements 18) als auch aufgrund ausschließlich der Druckdifferenz zwischen Eingang 21 und Ausgang 22 aus dem Ventilsitz 20 heraus gedrängt werden kann, das Entlüftungsventil 6 also zum Entlüften des Kraftstofftanks 2 eingestellt wird.

Die Figur 5 zeigt eine vierte mechanische Ausführungsform des Entlüftungsventils 6. Auch hier sei zunächst auf die vorstehenden Ausführungen verwiesen. Hier ist jedoch der Schließkörper 19 selbst als das Temperaturformänderungselement 18 ausgebildet oder weist dieses zumindest bereichsweise auf. Zum Abstützen des Schließkörper 19 beziehungsweise des Temperaturformänderungselement 18 ist ein Stützelement 29 vorgesehen. Es kann vorgesehen sein, dass das Stützelement 29 außermittig an dem Schließkörper 19 beziehungsweise dem Temperaturformänderungselement 18 angreift. Bei einer Ausdehnung des Temperaturformänderungselements 18 reicht demnach bereits eine vergleichsweise kleine Kraft aus, um ein Anheben oder Kippen durch Verformung des Temperaturformänderungselement 18 und damit ein zumindest teilweises Freigeben des Ventilsitzes 20 zu erreichen. Das Temperaturformänderungselement 18 muss demnach nicht der gesamten von der Feder 23 bewirken Federkraft entgegenwirken, um das Entlüftungsventil 6 zum Belüften des Kraftstofftanks 2 beziehungsweise zum Freigeben der Strömungsverbindung zwischen dem Eingang 21 und dem Ausgang 22 einzustellen. Das Stützelement 29 ist bei dieser Ausführungsform optional, weil bereits durch eine Formänderung des Temperaturformänderungselements 18 und dessen Abstützen auf dem Ventilsitz 20 ein zumindest teilweises Freigeben des Ventilsitzes 20 erreicht werden kann.

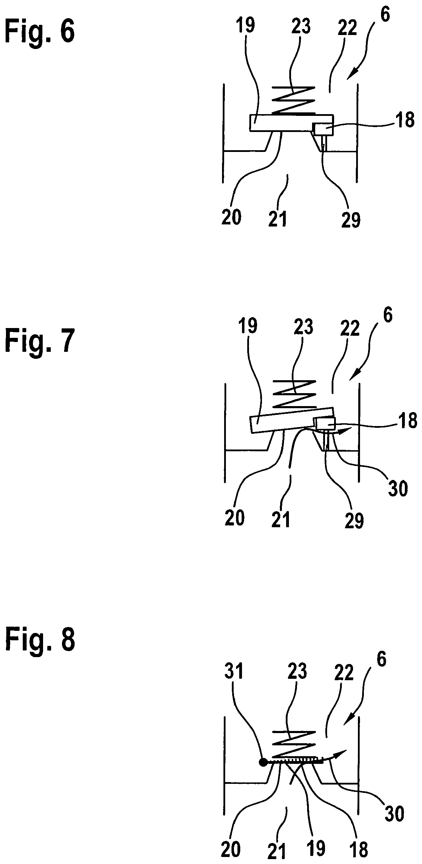

Die Figur 6 zeigt eine fünfte mechanische Ausführungsform des Entlüftungsventils 6. Dargestellt ist der Schließkörper 19 des Entlüftungsventils 6 in seiner Geschlossenposition. Auch hier sei zunächst auf die vorstehenden Ausführungen verwiesen. Das Temperaturformänderungselement 18 ist zwischen dem Stützelement 29 und dem Schließkörper 19 angeordnet, wobei es außermittig an diesem angreift. Das Stützelement 29 kann entfallen, wenn das Temperaturformänderungselement 18 unmittelbar, beispielsweise an einer Wandung des Entlüftungsventils 6, befestigt werden kann. Durch das außermittige Angreifen des Temperaturformänderungselements 18 an dem Schließkörper 19, wird die zum Öffnen benötigte Kraft, welche der Federkraft der Feder 23 entgegenwirken muss, deutlich verringert. Das Stützelement 29 kann derart an dem Temperaturformänderungselement 18 angeordnet sein, dass es bei einer Temperaturänderung aus diesem heraus gedrängt beziehungsweise in dieses hinein verlagert wird.

Die Figur 7 zeigt das Entlüftungsventil der Figur 6, wobei sich der Schließkörper 19 in seiner Offenposition befindet, so dass eine Strömungsverbindung zwischen dem Eingang 21 und dem Ausgang 22 vorliegt. Die Strömungsverbindung ist durch den Pfeil 30 angedeutet.

Die Figur 8 zeigt eine sechste mechanische Ausführungsform des Entlüftungsventils 6. Auch hier sei zunächst auf die vorstehenden Ausführungen verwiesen. Der Schließkörper 19 ist, analog zu der Ausführungsform der Figur 5, als Temperaturformänderungselement 18 ausgebildet und liegt hier als Bimetallelement vor. Dieses ist in einem Abstützscharnier 31 beziehungsweise einer Lagerstelle drehbar gelagert. Die Lagerung ist dabei derart vorgesehen, dass bei einer Verformung des Bimetallelements beziehungsweise des Temperaturformänderungselement 18 der Ventilsitz 20 freigegeben wird. In der Figur 8 ist der Schließkörper 19 wiederum in seiner Geschlossenposition (durchgezogene Linie) und seiner Offenposition (punktierte Linie) dargestellt.

## Patentansprüche

1. Verfahren zum Betreiben eines Kraftstoffsystems (1) einer Brennkraftmaschine, wobei das Kraftstoffsystem (1) über einen Kraftstofftank (2) und eine mindestens ein Entlüftungsventil (6) aufweisende Entlüftungseinrichtung (3) zur Entlüftung des Kraftstofftanks (2) verfügt, **dadurch gekennzeichnet, dass** bei deaktivierter Brennkraftmaschine in einer ersten Betriebsart anhand ausschließlich einer Temperatur das Entlüftungsventil (6) zum Entlüften des Kraftstofftanks (2) eingestellt wird, und/oder dass bei einem Deaktivieren der Brennkraftmaschine das Entlüften über einen bestimmten Zeitraum erfolgt, der eine vorbestimmte Zeitspanne umfasst.

2. Verfahren nach Anspruch 1, **dadurch gekennzeichnet, dass** das Entlüftungsventil (6) bei einem Überschreiten beziehungsweise Unterschreiten einer Grenztemperatur zum Entlüften des Kraftstofftanks (2) eingestellt wird.

3. Verfahren nach einem der vorhergehenden Ansprüche, **dadurch gekennzeichnet, dass** in einer zweiten Betriebsart anhand ausschließlich eines Drucks, insbesondere eines Kraftstofftankinnendrucks, das Entlüftungsventil (6) zum Entlüften des Kraftstofftanks (2) eingestellt wird.

4. Verfahren nach einem der vorhergehenden Ansprüche, **dadurch gekennzeichnet, dass** in einer dritten Betriebsart sowohl anhand der Temperatur als auch des Drucks das Entlüftungsventil (6) zum Entlüften des Kraftstofftanks (2) eingestellt wird.

5. Verfahren nach einem der vorhergehenden Ansprüche, **dadurch gekennzeichnet, dass** der bestimmte Zeitraum derart gewählt wird, dass der Kraftstofftankinnendruck um einen bestimmten Differenzdruck reduziert wird.

6. Verfahren nach einem der vorhergehenden Ansprüche, **dadurch gekennzeichnet, dass** als Temperatur eine Umgebungstemperatur, eine Kraftstofftankinnentemperatur, eine Kraftstofftemperatur, eine Entlüftungsventiltemperatur, eine Leitungstemperatur oder eine Abscheidevorrichtungstemperatur verwendet wird.

7. Verfahren nach einem der vorhergehenden Ansprüche, **dadurch gekennzeichnet, dass** zumindest bei deaktivierter Brennkraftmaschine ein Steuergerät (12) die Temperatur auswertet und das Entlüftungsventil (6) entsprechend einstellt, und dass das Steuergerät (12) oder ein weiteres Steuergerät (13) ausschließlich bei aktivierter Brennkraftmaschine zumindest den Druck auswertet und das Entlüftungsventil (6) entsprechend einstellt.

8. Verfahren nach einem der vorhergehenden Ansprüche, **dadurch gekennzeichnet, dass** das Entlüftungsventil (6) in ein in Abhängigkeit des Kraftstofftankfüllstands schaltendes Belüftungsventil (5), in ein dem Kraftstofftank (2) zugeordnete Sicherheitsventil, in einen Tankdeckel des Kraftstofftanks (2), in eine Abscheidevorrichtung, in den Kraftstofftank (2) oder in ein Überströmventil integriert oder einem solchen strömungstechnisch vor-, nach- oder parallel geschaltet wird.

9. Verfahren nach einem der vorhergehenden Ansprüche, **dadurch gekennzeichnet, dass** das Entlüftungsventil (6) zumindest ein Temperaturformänderungselement (18), insbesondere Temperaturdehnelement, bevorzugt ein Wachsdehnelement oder ein Bimetallelement, aufweist.

10. Kraftstoffsystem einer Brennkraftmaschine, insbesondere zur Durchführung des Verfahrens nach einem oder mehreren der vorhergehenden Ansprüche, wobei das Kraftstoffsystem (1) über einen Kraftstofftank (2) und eine mindestens ein Entlüftungsventil (6) aufweisende Entlüftungseinrichtung (3) zur Entlüftung des Kraftstofftanks (2) verfügt, **dadurch gekennzeichnet, dass** das Kraftstoffsystem (1) dazu ausgebildet ist, bei deaktivierter Brennkraftmaschine in einer ersten Betriebsart anhand ausschließlich einer Temperatur das Entlüftungsventil (6) zum Entlüften des Kraftstofftanks (2) einzustellen, und/oder dass bei einem Deaktivieren der Brennkraftmaschine das Entlüften über einen bestimmten Zeitraum vorgesehen ist, der eine vorbestimmte Zeitspanne umfasst.

## Claims

1. Method for operating a fuel system (1) of an internal combustion engine, whereby the fuel system (1) comprises a fuel tank (2) and a venting device (3) comprising at least one venting valve (6) for ventilating the fuel tank (2), **characterised in that** in a first operating mode the venting valve (6) for ventilating the fuel tank (2) is adjusted exclusively as a function of a temperature when the internal combustion engine is deactivated, and/or the ventilating takes place over a defined period of time, including a predetermined period of time, when the internal combustion engine is deactivated.

2. Method according to claim 1, **characterised in that** the venting valve (6) is adjusted for ventilating the fuel tank (2) when the temperature exceeds or falls below a threshold temperature.

3. Method according to any of the preceding claims, **characterised in that** in a second operating mode the venting valve (6) for ventilating the fuel tank (2) is adjusted exclusively as a function of a pressure, in particular an internal fuel tank pressure.

4. Method according to any of the preceding claims, **characterised in that** in a third operating mode the venting valve (6) for ventilating the fuel tank (2) is adjusted as a function of both the temperature and the pressure.

5. Method according to any of the preceding claims, **characterised in that** the defined period of time is selected so that the internal fuel tank pressure is reduced by a defined differential pressure.

6. Method according to any of the preceding claims, **characterised in that** an ambient temperature, an internal fuel tank temperature, a fuel temperature, a venting valve temperature, a line temperature or a separation device temperature is used as the temperature.

7. Method according to any of the preceding claims, **characterised in that**, at least when the internal combustion engine is deactivated, a control device (12) evaluates the temperature and adjusts the venting valve (6) accordingly, and the control device (12) or a further control device (13) evaluates at least the pressure and adjusts the venting valve (6) accordingly only when the internal combustion engine is activated.

8. Method according to any of the preceding claims, **characterised in that** the venting valve (6) is integrated in, or fluidly arranged upstream of, downstream of, or in parallel to an aeration valve (5) which switches in dependence on the fuel tank fill level, a safety valve which is assigned to the fuel tank (2), a tank lid of the fuel tank (2), a separation device, the fuel tank (2) or an overflow valve.

9. Method according to any of the preceding claims, **characterised in that** the venting valve (6) comprises at least one temperature deforming element (18), in particular a temperature expansion element, preferably a wax expansion element or a bimetal element.

10. Fuel system of an internal combustion engine, in particular for performing the method according to one or more of the preceding claims, wherein the fuel system (1) comprises a fuel tank (2) and a venting device (3) comprising at least one venting valve (6) for ventilating the fuel tank (2), **characterised in that** the fuel system (1) is configured to adjust the venting valve (6) for ventilating the fuel tank (2) in a first operating mode exclusively as a function of a temperature when the internal combustion engine is deactivated, and/or the ventilating takes place over a defined period of time, including a predetermined period of time, when the internal combustion engine is deactivated.

## Revendications

1. Procédé de fonctionnement d'un système de carburant (1) d'un moteur à combustion interne, dans lequel le système de carburant (1) dispose d'un réservoir de carburant (2) et d'un dispositif de purge d'air (3) comportant au moins une soupape de purge d'air (6) et destiné à la purge d'air du réservoir de carburant (2), **caractérisé en ce que**, lorsque le moteur à combustion interne est désactivé, dans un premier mode de fonctionnement, la soupape de purge d'air (6) est réglée pour la purge d'air du réservoir de carburant (2) exclusivement à l'aide d'une température et/ou **en ce que**, lors d'une désactivation du moteur à combustion interne, la purge d'air s'effectue sur un intervalle de temps déterminé qui comprend un laps de temps prédéterminé.

2. Procédé selon la revendication 1, **caractérisé en ce que** la soupape de purge d'air (6) est réglée pour la purge d'air du réservoir de carburant (2) lors d'un dépassement par valeur supérieure ou inférieure d'une température limite.

3. Procédé selon l'une des revendications précédentes, **caractérisé en ce que**, dans un deuxième mode de fonctionnement, la soupape de purge d'air (6) est réglée pour la purge d'air du réservoir de carburant (2) exclusivement à l'aide d'une pression, notamment d'une pression à l'intérieur du réservoir de carburant.

4. Procédé selon l'une des revendications précédentes, **caractérisé en ce que**, dans un troisième mode de fonctionnement, la soupape de purge d'air (6) est réglée pour la purge d'air du réservoir de carburant (2) aussi bien à l'aide de la température qu'à l'aide de la pression.

5. Procédé selon l'une des revendications précédentes, **caractérisé en ce que** l'intervalle de temps déterminé est choisi de telle sorte que la pression à l'intérieur du réservoir de carburant est réduite d'une différence de pression déterminée.

6. Procédé selon l'une des revendications précédentes, **caractérisé en ce que** l'on utilise comme température une température ambiante, une température à l'intérieur du réservoir de carburant, une température de carburant, une température de soupape de purge d'air, une température de conduite ou une température de dispositif séparateur.

7. Procédé selon l'une des revendications précédentes, **caractérisé en ce que**, au moins lorsque le moteur à combustion interne est désactivé, un appareil de commande (12) évalue la température et règle la soupape de purge d'air (6) en conséquence et **en ce que**, exclusivement lorsque le moteur à combustion interne est activé, l'appareil de commande (12) ou un autre appareil de commande (13) évalue au moins la pression et règle la soupape de purge d'air (6) en conséquence.

8. Procédé selon l'une des revendications précédentes, **caractérisé en ce que** la soupape de purge d'air (6) est intégrée dans une soupape d'aération (5) commutant en fonction du niveau de réservoir de carburant, dans une soupape de sécurité associée au réservoir de carburant (2), dans un couvercle de réservoir du réservoir de carburant (2), dans un dispositif séparateur, dans le réservoir de carburant (2) ou dans une soupape de trop-plein ou est montée en amont, en aval ou en parallèle, du point de vue de la technique des fluides, de l'un de ceux-ci.

9. Procédé selon l'une des revendications précédentes, **caractérisé en ce que** la soupape de purge d'air (6) comporte au moins un élément (18) à variation de forme à la température, en particulier un élément à dilatation thermique, de préférence un élément à dilatation de cire ou un élément à bilame.

10. Système de carburant d'un moteur à combustion interne, en particulier pour la mise en oeuvre du procédé selon l'une ou plusieurs des revendications précédentes, dans lequel le système de carburant (1) dispose d'un réservoir de carburant (2) et d'un dispositif de purge d'air (3) comportant au moins une soupape de purge d'air (6) et destiné à la purge d'air du réservoir de carburant (2), **caractérisé en ce que** le système de carburant (1) est conçu pour, lorsque le moteur à combustion interne est désactivé, dans un premier mode de fonctionnement, régler la soupape de purge d'air (6) pour la purge d'air du réservoir de carburant (2) exclusivement à l'aide d'une température et/ou pour, lors d'une désactivation du moteur à combustion interne, prévoir que la purge d'air s'effectue sur un intervalle de temps déterminé qui comprend un laps de temps prédéterminé.
